# EUROPÄISCHE PATENTSCHRIFT

(11) **EP 2 149 831 B1**
(45) Veröffentlichungstag und Bekanntmachung des Hinweises auf die Patenterteilung: **01.02.2012**
(21) Anmeldenummer: 08013765.6
(22) Anmeldetag: 31.07.2008
(51) Int. Cl.: G05B 19/418

(54) **Steuerungsverfahren für einen Verbund aus mehreren, hintereinander und/oder nebeneinander angeordneten, mehrachsigen Handlingsgeräten sowie Datenspeichermedium, Steuerungssystem und Verbund**
Control method for a composite of several multi-axle handling devices arranged behind or beside each other and data storage medium, control system and composite
Procédé de commande pour un composite comprenant plusieurs appareils de manutention multiaxiaux disposés les uns derrière les autres et/ou les uns à côté des autres ainsi que support de stockage de données, système de commande et composite

(43) Veröffentlichungstag der Anmeldung: 03.02.2010
(73) Patentinhaber: Siemens Aktiengesellschaft, 80333 München (DE)
(72) Erfinder: Hartmann, Guido, 51377 Leverkusen (DE); Heber, Tino, Dr., 09599 Freiberg (DE); Heydenreich, Andre, 08062 Zwickau (DE); Hüfner, Holger, 02625 Bautzen (DE); Kram, Raimund, 91056 Erlangen (DE)

(56) Entgegenhaltungen:
- EP-A- 1 182 529
- WO-A-02/082192
- DE-A1- 10 162 967
- DE-A1-102005 048 472

## Beschreibung

Die Erfindung betrifft ein Steuerungsverfahren für einen Verbund aus mehreren, hintereinander und/oder nebeneinander angeordneten, mehrachsigen Handlingsgeräten zum Ausführen jeweils mehrdimensionaler Arbeits- und/oder Handlingsbewegungen und aus zumindest einer Fördereinrichtung zum Mitführen von Objekten entlang der Handlingsgeräte. Die Handlingsgeräte sind zum Aufnehmen, Bearbeiten und Absetzen der jeweiligen mitgeführten Objekte vorgesehen.

Weiterhin betrifft die Erfindung ein Datenspeichermedium mit einem in maschinenlesbarer Form gespeicherten Modell aus Technologieobjekten zur Modellierung der Funktionalität eines Verbundes aus mehreren mehrachsigen Handlingsgeräten und Fördereinrichtungen.

Die Erfindung betrifft darüber hinaus ein Steuerungssystem für einen derartigen Verbund sowie einen Verbund mit einem derartigen Steuerungssystem.

Aus der WO 02/082192 A ist ein Verfahren zum Betrieb von Maschinen mit mehreren, synchronisierten Achsen bekannt, wobei die Achsen durch jeweils zugehörige Einzelantriebe untereinander synchronisiert nach Maßgabe einer elektronischen, zeitlichen Leitachsfunktion angetrieben werden, die mit einer Momentanposition einer Leitachse korrespondiert. Es werden die Bewegungen mehrerer, abgeleiteter Achsen nach Maßgabe von Umsetzungsfunktionen, die jeweils vorbestimmten, mechanischen Umsetzungen bezüglich der Leitachse entsprechen, von der Leitachse abgeleitet. Alle Achsen folgen zumindest einer Gruppe von Achsen, die sich hinsichtlich der Umsetzung entsprechen, einer elektronischen, zeitlichen Folgeleitachsfunktion, die mit einer Momentanposition einer Folgeleitachse korrespondiert und durch Verknüpfung der betreffenden Umsetzungsfunktion und der Leitachsfunktion gebildet wird. Bei den Maschinen handelt es sich vorzugsweise um Druckmaschinen, aber auch um Papierverarbeitungsmaschinen, Verpackungsmaschinen oder um Produktionsmaschinen.

Aus der DE 10 2005 048 472 A1 ist ein Verfahren des Betriebs einer Rotationsdruckmaschine bekannt, welche zumindest eine Materialbahn bedruckt und bearbeitet. Die Rotationsdruckmaschine weist Druckwerke und/oder Druckwerksgruppen, zumindest einen Falzapparat, und Transportelemente zum Transport der zumindest einen Materialbahn durch die Rotationsdruckmaschine in den zumindest einen Falzapparat auf. Die zuvor genannten Komponenten werden zumindest teilweise mechanisch unabhängig voneinander elektrisch angetrieben und im Druckbetrieb durch Sollwertvorgaben zumindest einer Leitachse mit einem elektronisch generierten Synchronisationstakt synchronisiert.

Bei den zuvorgenannten Handlingsgeräten handelt es sich insbesondere um Roboter, das heißt um universell einsetzbare Bewegungsautomaten mit mehreren Achsen. Die Bewegungen der Maschinenachsen sind frei programmierbar und gegebenenfalls sensorgeführt. Die Bewegung wird anhand eines an das jeweilige Handlingsgerät bzw. an ein Antriebssteuergerät des Handlingsgerätes übertragenen Leitwertes gesteuert. Bei den Achsen kann es sich um translatorische und/oder um rotatorische Achsen handeln.

Die betrachteten Handlingsgeräte sind mit Aufnehmern zum Aufnehmen und Absetzen von Objekten oder zum Aufnehmen von Werkzeugen, Bearbeitungswerkzeugen oder anderen Fertigungsmitteln ausrüstbar. Derartige Handlingsgeräte können Handhabungs-, Fertigungs-, Bearbeitungs- oder Automatisierungsaufgaben ausführen. Je nach Ausgestaltung des Handlingsgerätes können Bewegungen in einer Fläche, wie z.B. in einer zylindrischen Fläche, oder innerhalb eines dreidimensionalen Arbeitsraums vorgenommen werden. Weitere bekannte Handlingsgeräte sind sogenannte Picker, wie z.B. zwei- oder dreidimensional arbeitende Delta-Picker oder Rollen-Picker, oder als SCARA-Roboter bezeichnete horizontale Gelenkarmroboter. Die Picker werden vorzugsweise zum Verpacken von Verpackungsobjekten, wie z.B. von Pralinen, Backwaren, Schreibartikeln, medizinischen Produkten und dergleichen eingesetzt. Ganz allgemein kann es sich bei den Objekten um Waren, Halbzeug, Stückgut, Baugruppen oder andere im Rahmen der Herstellung von Produkten entstehende Zwischenprodukte handeln.

Bei den Fördereinrichtungen handelt es sich z.B. um angetriebene Förderbänder, Rollenbahnen, Drehteller und dergleichen. Derartige Fördereinrichtungen werden auch als Conveyor bezeichnet. Sie werden typischerweise mit einer konstanten Geschwindigkeit angetrieben, wie z.B. mittels eines Normmotors. Typischerweise werden die Objekte entlang einer Förderlinie bewegt. Die Fördereinrichtungen können weiterhin mit Weggebern, wie z.B. mit einem Drehgeber, ausgestattet sein. Auf Basis der erfassten Gebersignale ist dann die jeweilige Wegposition und/oder Geschwindigkeit eines bewegten Objektes ableitbar. Die Bestimmung der jeweiligen Wegposition bzw. der jeweiligen Geschwindigkeit eines bewegten Objektes kann z.B. mittels eines Steuergerätes erfolgen, welches signal- oder datentechnisch mit einem solchen Weggeber verbunden ist. Alternativ ist die jeweilige Wegposition und/oder Geschwindigkeit der Objekte über ein mit dem Steuergerät verbundenes optisches Messsystem erfassbar. Darunter fallen auch Lichtschranken, um ein exaktes Passieren eines auf der Fördereinrichtung mitgeführten Objekts zu erfassen.

Häufig arbeiten ein oder mehrere Handlingsgeräte in einem Verbund mit einer oder mehreren Fördereinrichtungen. Die Handlingsgeräte können in Bezug auf die Fördereinrichtungen derart angeordnet sein, dass ein jeweiliges Handlingsgerät nur Objekte von einer zugeordneten Fördereinrichtung oder mehrere Objekte von mehreren Fördereinrichtungen aufnehmen kann. Zur Steuerung der Handlingsgeräte kann ein gemeinsames Steuerungssystem vorhanden sein. Ein solches Steuerungssystem kann mehrere, verteilt angeordnete und über ein Kommunikationssystem verbundene Steuergeräte aufweisen. Vorzugsweise ist ein solches Steuergerät eine Maschinensteuerung mit einer sogenannten "Motion Control"-Funktionalität. Ein derartiges Steuergerät überträgt entsprechende Stellkoordinaten als Leitwert zur Bewegung der Maschinenachsen an das jeweilige Handlingsgerät, das heißt an den zugehörigen Antrieb zur elektrischen Ansteuerung entsprechender Aktoren des Handlingsgerätes, wie z.B. von Motoren. Die Ansteuerung kann alternativ oder zusätzlich auf pneumatischem oder hydraulischem Wege erfolgen.

Bei heute bekannten Verbunden aus Handlingsgeräten und Fördereinrichtungen werden die Gebersignale einer jeweiligen Fördereinrichtung unmittelbar von dem Steuergerät eingelesen, welches diese für die Ansteuerung eines damit verbundenen Handlingsgerätes benötigt. Unter Umständen ist auch eine mehrfache Ankopplung der Gebersignale an mehrere Steuergeräte erforderlich.

Ausgehend von dem eingangs genannten Stand der Technik ist es eine Aufgabe der vorliegenden Erfindung, ein flexibleres und zugleich zuverlässigeres Steuerungsverfahren für einen derartigen Verbund anzugeben.

Es ist eine weitere Aufgabe der Erfindung, ein geeignetes Datenspeichermedium sowie ein geeignetes Steuerungssystem anzugeben.

Schließlich ist es eine Aufgabe der Erfindung, einen Verbund aus mehreren Handlingsgeräten und aus einem derartigen Steuerungssystem anzugeben.

Die Aufgabe der Erfindung wird für das Verfahren mit den Merkmalen des Patentanspruchs 1 gelöst. Vorteilhafte Verfahrensvarianten sind in abhängigen Ansprüchen 2 bis 10 angegeben.

Weiterhin wird die Aufgabe für das Datenspeichermedium mit den Merkmalen des Patentanspruchs 11, für das Steuerungssystem mit den Merkmalen des Patentanspruchs 12 und für den Verbund aus Handlingsgeräten, Fördereinrichtung und einem derartigen Steuerungssystem mit den Merkmalen des Patentanspruchs 14 gelöst.

Erfindungsgemäß wird ein Leitwert für die Bewegungsfolge einer mehrdimensionalen Arbeits- und/oder Handlingsbewegung für ein jeweiliges Handlingsgerät durch Bahnobjekte in Form von Technologieobjekten modelliert, welche die entsprechende Funktionalität für die Bahninterpolation mit gleichzeitiger Bewegungsfolge an einem Leitwert der jeweiligen Fördereinrichtung bereitstellen.

Kern der vorliegenden Erfindung ist, dass eine an sich bekannte Modellierung eines verteilten Gleichlaufs mit einer Vielzahl von Achsen auf unterschiedlichen oder verteilten Steuerungssystemen an einem oder mehreren Leitwert(en), auf die Synchronisation der mehrdimensionalen Bewegungen von Handlingsgeräten, die auf unterschiedlichen oder verteilten Steuerungssystemen ausgeführt werden, mit der Bewegung eines oder mehrerer Fördereinrichtung angewendet werden.

Dadurch ist der Leitwert für die Bewegungsfolgefunktionalität der einzelnen Handlingsgeräte beliebig oft nutzbar, sowohl bei einer lokalen Anwendung, als auch in einem verteilten Steuerungssystem. Ein mehrfaches Einlesen eines Conveyor-Istwertes ist nicht mehr notwendig. Darüber hinaus ist eine zusätzliche Verkabelung der entsprechenden Geber nicht mehr erforderlich.

Durch die Vorgabe bzw. Programmierbarkeit von sequentiellen Bahnbewegungen und der Umschaltbarkeit des Leitwertes sowie damit der möglichen Zuordenbarkeit der Bahnbewegung zu einer jeweilig anderen Fördereinrichtung ist eine flexible Bewegungsfolge der Handlingsgeräte an der jeweiligen ausgewählten Fördereinrichtung gegeben. Damit können sich beispielsweise auch die Bewegungen der einzelnen Handlingsgeräte an den von den Fördereinrichtungen mitgeführten Objekten ergänzen oder ablösen, und dies auch bei Ausführung der Steuerung der Handlingsgeräte auf unterschiedlichen Steuergeräten.

Somit kann ein Handlingsgerät, welches eine Automatisierungsaufgabe an einer Fördereinrichtung ausführt, vorteilhaft die Automatisierungsaufgabe eines ausgefallenen Handlingsgerätes an einer benachbarten Fördereinrichtung übernehmen. Dadurch werden die Flexibilität im Verbund und die Verfügbarkeit eines derartigen Verbundes erheblich gesteigert.

Nach einer vorteilhaften Verfahrensvariante ist ein Leitwert ein Weggeber-Istwert der jeweiligen Fördereinrichtung, ein Ist- oder Sollwert einer realen Achse oder ein Ist- oder Sollwert einer virtuellen, rechnerischen Achse.

Der besondere Vorteil hier ist, dass über das Zwischenschalten virtueller Achsen, die hinreichend bekannten Mechanismen für einen verteilbaren Gleichlauf bei Vielachsanwendungen verwendet werden können. Dadurch erweitert sich der Funktionsumfang, wie er z.B. bei Steuergeräten des Typs SIMOTION der Fa. Siemens für Vielachsanwendungen verfügbar ist, erheblich. Ein weiterer Vorteil ist, dass zwischen verschiedenen Leitwerten umgeschaltet werden kann, wie z.B. bei einem Ausfall eines Gebers.

Nach einer weiteren vorteilhaften Verfahrensvariante ist zur Erfassung eines auf einem Weggebersignal eines Weggebers basierenden Leitwertes der jeweiligen Fördereinrichtung ein Geberobjekt in Form eines Technologieobjektes vorgesehen, welches die entsprechende technologische Funktion modelliert.

Derartige Technologieobjekte bieten einem Anwender eine technologische Sicht auf Aktoren und Sensoren, und stellen technologische Funktionen für diese zur Verfügung. Bei den Technologieobjekten handelt es sich im Wesentlichen um Softwaremodule, welche in Echtzeit auf einer Prozessoreinheit des Steuerungssystems, wie z.B. auf einer Antriebssteuerung vom Typ SIMOTION der Fa. Siemens, ausgeführt werden. Über ein jeweiliges Eingangsinterface und Ausgangsinterface können diese für die vorliegende Automatisierungsaufgabe parametriert werden.

Ist ein derartiges Geberobjekt ordnungsgemäß parametriert und verschaltet, so kann der ausgabeseitige Leitwert einem beliebigen Handlingsgerät zur Ausführung einer entsprechenden Automatisierungsaufgabe zugeordnet werden.

Vorzugsweise werden die Bahnobjekte und das zumindest eine Geberobjekt auf einem gleichen Steuerungssystem ausgeführt.

Weist das Steuerungssystem mehrere verteilt angeordnete Steuergeräte auf, so können die Bahnobjekte und das zumindest eine Geberobjekt auf verschiedenen Steuergeräten ausgeführt werden. Es wird der durch das jeweilige Geberobjekt bereitgestellte Leitwert über ein isochrones Kommunikationssystem, wie z.B. über ein Bussystem, an die verteilt angeordneten Steuergeräte übertragen. Die bei der Übertragung auftretenden systembedingten Kommunikationsverzugszeiten können bei dem jeweiligen Leitwert über eine Werteextrapolation kompensiert werden.

Nach einer weiteren Verfahrensvariante wird den jeweiligen Handlingsgeräten im kinematischen Endpunkt ein Endpunktkoordinatensystem zugeordnet, welches auf ein Basiskoordinatensystem über eine Koordinatentransformation bezogen ist. Dieses Endpunktkoordinatensystem ist dabei Teil des jeweiligen Bahnobjektes.

Weiterhin kann den jeweiligen, auf einer Fördereinrichtung mitgeführten Objekten ein Objektkoordinatensystem zugeordnet werden, welches auf ein Basiskoordinatensystem bezogen ist und welches mit einer jeweiligen bewegten Fördereinrichtung mitgeführt wird. Ein Handlingsgerät kann sich dann bewegungssynchron mit der jeweiligen Fördereinrichtung und folglich mit dem betreffenden Objekt bewegen und eine relativ dazu überlagerte Bewegung für die vorgesehene Automatisierungsaufgabe ausführen.

Einer weiteren Verfahrensvariante zufolge ist ein jeweiliges, zu einer Fördereinrichtung gehörendes Geberobjekt, ein zu einer realen Achse oder zu einer virtuellen Achse gehörendes Technologieobjekt für eine Zuordnung eines Leitwertes individuell an ein jeweiliges Bahnobjekt schaltbar. Es kann auch ein und dasselbe Geberobjekt bzw. eine und dieselbe reale oder virtuelle Achse an mehrere Bahnobjekte geschaltet werden, welche vorzugsweise die entsprechende Funktionalität für die Bahninterpolation an einer gleichen Fördereinrichtung modellieren.

Die Verschaltung eines jeweiligen Bahnobjektes mit einem jeweiligen, zu einer Fördereinrichtung gehörenden Geberobjekt, zu einer realen Achse oder zu einer virtuellen Achse gehörenden Technologieobjekt kann im Betrieb fest sein. Alternativ kann die Verschaltung im Betrieb, das heißt online, änderbar oder umschaltbar sein.

Weiterhin wird die Aufgabe der Erfindung durch ein Datenspeichermedium gelöst, welches ein in maschinenlesbarer Form gespeichertes Modell aus Technologieobjekten zur Modellierung der Funktionalität eines Verbundes aus mehreren, mehrachsigen Handlingsgeräten und zumindest einer Fördereinrichtung zur Durchführung des erfindungsgemäßen Steuerungsverfahrens auf einem prozessorgestützten Steuerungssystem in Echtzeit aufweist. Hierzu weist das Steuerungssystem vorzugsweise ein Echtzeitbetriebssystem auf. Das Modell aus Technologieobjekten ist typischerweise ein Softwaremodul, welches zum Ausführen in einen Arbeitsspeicher des Steuerungssystems geladen wird. Als Speichermedium kommen insbesondere optische Speichermedien, wie z.B. eine CD-ROM oder DVD-ROM, magnetische Speichermedien, wie z.B. eine Diskette oder Festplatte, und insbesondere Festspeicher in Frage, wie z.B. ein USB-Stick oder eine Flash-Speicherkarte. Letztere sind z.B. SD-, CF- oder MM-Speicherkarten.

Gelöst wird die Aufgabe für das Steuerungssystem, welches prozessorgestützte Mittel zur Ausführung eines in maschinenlesbarer Form gespeicherten Modells aus Technologieobjekten zur Modellierung der Funktionalität des Verbundes zur Durchführung des erfindungsgemäßen Steuerungsverfahrens aufweist.

Nach einer Ausführungsform umfasst das erfindungsgemäße Steuerungssystem mehrere, jeweils einem der Handlingsgeräte zugeordnete und über ein Kommunikationssystem verbundene Steuergeräte. Das Steuerungssystem weist weiterhin Kompensationsmittel zur Kompensation von Kommunikationsverzugszeiten über eine Werteextrapolation auf. Die Kompensation kann z.B. auf einem Steuergerät ausgeführt werden, welches die Masterfunktion übernimmt. Die anderen Steuergeräte, welche dann die Slavefunktion übernehmen, erhalten entsprechend zeitlich kompensierte bzw. korrigierte Bewegungswerte.

Schließlich wird die Aufgabe der Erfindung durch einen Verbund aus mehreren, hintereinander und/oder nebeneinander angeordneten, mehrachsigen Handlingsgeräten zum Ausführen jeweils mehrdimensionaler Arbeits- und/oder Handlingsbewegungen, aus zumindest einer Fördereinrichtung zum Mitführen von Objekten entlang der Handlingsgeräte sowie aus einem derartigen Steuerungssystem gelöst.

Die Erfindung sowie vorteilhafte Ausführungen der Erfindung werden im Weiteren anhand der nachfolgenden Figuren näher beschrieben. Es zeigen
- FIG 1: beispielhaft einen Verbund aus drei Handlingsgerä- ten, aus einer Fördereinrichtung und einem überge- ordneten Steuerungssystem nach dem Stand der Tech- nik,
- FIG 2: beispielhaft eine Systemarchitektur mit einem Mo- dell auf Basis von Technologieobjekten zur Model- lierung der Funktionalität eines Verbundes mit mehrachsigen Handlingsgeräten gemäß der Erfindung,
- FIG 3: beispielhaft die ein- und ausgangsseitigen Schnitt- stellen eines Technologieobjektes,
- FIG 4: beispielhaft einen Verbund aus drei Handlingsgerä- ten, aus zwei Fördereinrichtungen und einem überge- ordneten, verteilten Steuerungssystem gemäß der Er- findung,
- FIG 5: beispielhaft den funktionalen Aufbau eines Bahnob- jekts zur Modellierung der Funktionalität einer mehrdimensionalen Bahninterpolation gemäß der Er- findung,
- FIG 6: ein Beispiel für ein Objektkoordinatensystem und dessen Bezug auf ein Basiskoordinatensystem,
- FIG 7: ein Beispiel für Verschaltungen eines Geberobjektes an mehrere Bahnobjekte gemäß der Erfindung und
- FIG 8: ein Beispiel für Verschaltungen mehrere Geberobjek- te, einer realen Achse und einer virtuellen Achse an ein Bahnobjekt gemäß der Erfindung.

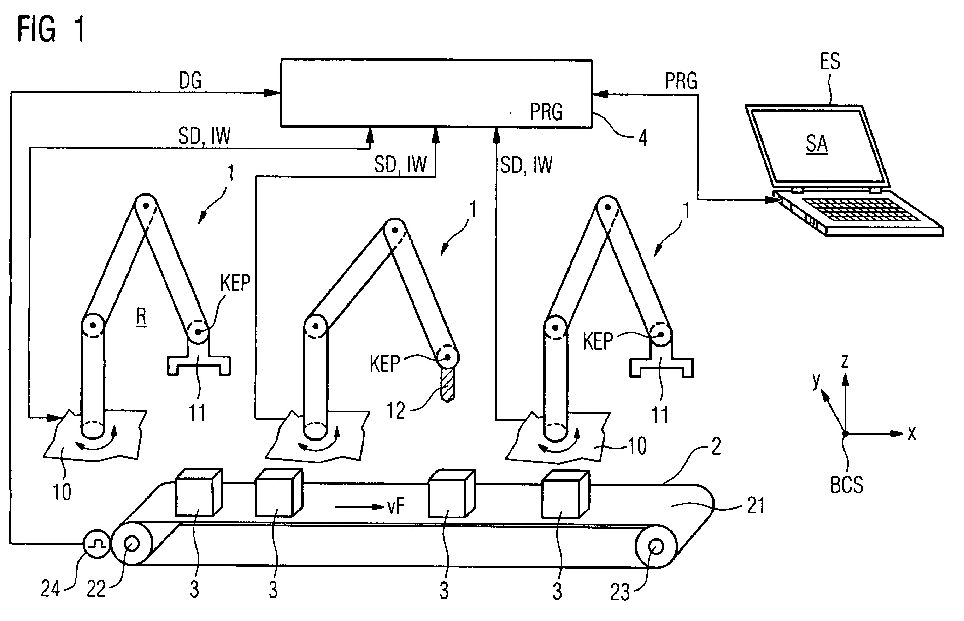

FIG 1 zeigt beispielhaft einen Verbund aus drei Handlingsgeräten 1, aus einer Fördereinrichtung 2 und einem übergeordneten Steuerungssystem 4 nach dem Stand der Technik.

Die im mittleren Teil der FIG 1 gezeigten Handlingsgeräte 1 bzw. Roboter weisen vier rotatorische Achsen mit dazwischen liegenden Rotorarmen auf. Mit KEP ist ein sogenannter kinematischer Endpunkt bezeichnet, welcher den räumlichen Endpunkt für die Bahnberechnung bildet. Mit dem Bezugszeichen 10 ist eine ortsfeste Basis des Roboters 1 und mit dem Bezugszeichen 11 ein Aufnehmer bezeichnet, welcher um den KEP schwenkbar angeordnet ist und welcher zum Aufnehmen und Absetzen von Objekten 3 sowie zum Aufnehmen eines Werkzeuges 12, wie z.B. eines Bohrers, ausgebildet ist. Die Anordnung der Achsen der jeweiligen Handlingsgeräte 1 erlaubt eine dreidimensionale Bewegung des Aufnehmers 11 in einem jeweiligen Arbeitsraum R. Bei den Objekten 3 handelt es sich beispielhaft um Würfel, welche unter anderem durch das mittlere Handlingsgerät 1 mit Bohrungen versehen werden.

Im unteren Teil der FIG 1 ist eine Fördereinrichtung 2 in Form eines Laufbandes zum Vorbeiführen der aufzunehmenden Objekte 3 gezeigt. Das Laufband 2 weist ein Förderband 21 auf, welches vorzugsweise mit konstanter Geschwindigkeit vF über zwei Walzen 22, 23 angetrieben wird. Es kann auch nur eine der beiden Walzen 22, 23 angetrieben sein. Ein Drehgeber 24 an einer der Walzen 22 dient der Erfassung von Wegimpulsen DG.

Im oberen Teil der FIG 1 ist ein Steuerungssystem 4 dargestellt, welches eine nicht weiter dargestellte prozessorgestützte Steuereinheit unter anderem zum Ausführen eines Automatisierungsprogramms PRG aufweist. Das Steuerungssystem 4 gibt Stellkoordinaten SD an die jeweiligen Handlingsgeräte 1 zur Bewegungssteuerung der Achsen aus. Auf umgekehrtem Weg empfängt das Steuerungssystem 4 dazugehörende, aktuelle Koordinaten-Istwerte IW. Im Beispiel der FIG 1 ist das Steuerungssystem 4 mit dem Drehgeber 24 zur Wegerfassung des Förderbandes 2 verbunden. Auf Basis der erfassten Wegimpulse DG kann durch das Steuerungssystem 4 die aktuelle Position der Objekte 3 ermittelt werden.

Weiterhin führt das gezeigte Steuerungssystem 4 das Automatisierungsprogramm PRG aus, welches dem Steuerungssystem 4 beispielhaft über ein Engineering-System ES zugespielt wird. Mit SA ist eine auf dem Engineering-System ES hinterlegte Systemarchitektur bezeichnet, auf dessen Basis das lauffähige Automatisierungsprogramm PRG generiert wird. Schließlich ist mit BCS ein ortsfestes Basiskoordinatensystem bezeichnet, auf das sich alle mehrdimensionalen Berechungen und Bewegungen beziehen.

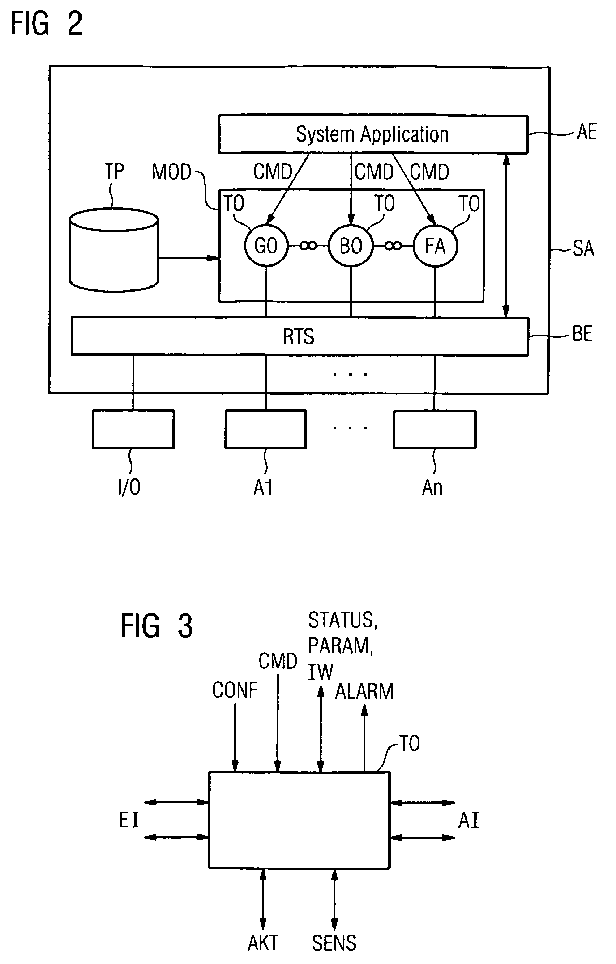

FIG 2 zeigt beispielhaft eine Systemarchitektur SA mit einem Modell MOD auf Basis von Technologieobjekten TO zur Modellierung der Funktionalität eines Verbundes mit mehrachsigen Handlingsgeräten 1 gemäß der Erfindung.

Die gezeigte Systemarchitektur SA umfasst eine Systemapplikation auf Applikationsebene AE sowie ein Modell MOD zur Modellierung der mehrdimensionalen Bewegungsfolge insbesondere auf Basis von Bahnobjekten BO und Geberobjekten GO als Technologieobjekten TO gemäß der Erfindung. Die Verknüpfungen der Technologieobjekte TO, GO, BO, FA untereinander sind durch gekoppelte "Kringel" dargestellt. Mit FA ist beispielhaft das Technologieobjekt TO "Folgeachse" bezeichnet, welches seinerseits Leitwert für ein weiteres Bahnobjekt BO sein kann.

Erfindungsgemäß wird dabei der jeweilige Leitwert für die Bewegungsfolge einer mehrdimensionalen Arbeits- und/oder Handlingsbewegung für ein jeweiliges Handlingsgerät nun wie ein Leitwert für Vielachsanwendungen mit Gleichlauf, wie z.B. bei einer Druckmaschine, bei einem Papier- oder Walzwerk oder dergleichen, modelliert. Der jeweilige Leitwert kann ein Weggeber-Istwert der jeweiligen Fördereinrichtung, ein Ist- oder Sollwert einer realen Achse oder ein Ist- oder Sollwert einer virtuellen, rechnerischen Achse sein. Zur Erfassung eines auf dem Weggebersignal eines Weggebers basierenden Leitwertes der jeweiligen Fördereinrichtung ist jeweils ein Geberobjekt GO in Form eines solchen Technologieobjektes TO vorgesehen, welches die entsprechende technologische Funktion modelliert. Weiterhin sind solche Bahnobjekte BO in Form von Technologieobjekten TO zum Berechnen der mehrachsigen Bewegung eines Handlingsgerätes vorgesehen, welche die entsprechende Funktionalität für die Bahninterpolation modellieren.

Mit RTS ist ein Echtzeitbetriebssystem auf Betriebssystemebene BE bezeichnet, welches entsprechende, zeitbezogene Steuersignale an die anzusteuernden Achsen A1 bis An bzw. deren zugehörenden Antriebe ausgibt. Mit I/O sind Ein- und Ausgangssignale bezeichnet, wie z.B. zum Ansteuern von Aktoren oder zum Erfassen von Sensoren, wie z.B. von Gebersignalen. Mit CMD sind Steuerbefehle bezeichnet, welche von der Systemapplikation an das Modell MOD übertragen werden. Bei derartigen Befehlen kann es sich z.B. um einen MOVE-Befehl zum Verfahren einer Achse um eine bestimmte Länge handeln. Mit TP ist eine Datenbank oder ein Technologiepaket bezeichnet, in welcher der Funktionsumfang der jeweiligen Technologieobjekte TO festgelegt und auch der zugehörige Quellcode hinterlegt ist. Die gesamte Systemarchitektur SA kann auch als ausführbares Automatisierungsprogramm PRG auf dem zugewiesenen Steuerungssystem 4 ausgeführt werden. Änderungen und Überarbeitungen erfolgen typischerweise in einem Engineering-System ES, auf welchem die Systemarchitektur SA gespeichert ist.

FIG 3 zeigt beispielhaft die ein- und ausgangsseitigen Schnittstellen eines Technologieobjektes TO. Mit EI ist ein eingangsseitiges Interface und mit AI ein ausgangsseitiges Interface zum Verschalten mit weiteren Technologieobjekten TO oder mit einem Leitwert bezeichnet. Mit AKT sind Signale zum Ansteuern von Aktoren und mit SENS Eingangssignale zur Erfassung von Sensoren bezeichnet. Die Technologieobjekte TO können weiterhin in einem Fehlerfall Alarmmeldungen ALARM ausgeben. Über die Softwareschnittstelle CONF ist eine Konfiguration des Technologieobjektes TO möglich. Über einen Befehlseingang erfolgt die Zuspielung eines Steuerbefehls CMD aus der übergeordneten Applikationsebene AE. Mit STATUS und PARAM sind ausgebbare Statusinformationen sowie Parameter und mit IW Istwerte bezeichnet, die ein Technologieobjekt TO z.B. zur Ausführung einer Regelungsfunktion benötigt.

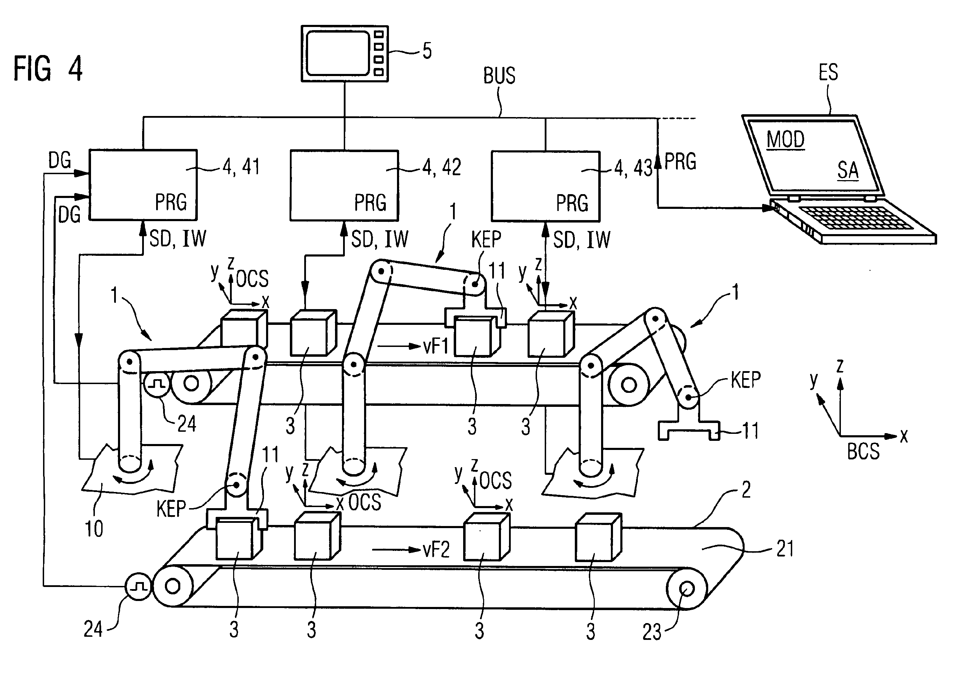

FIG 4 zeigt beispielhaft einen Verbund aus drei Handlingsgeräten 1, aus zwei Fördereinrichtungen 2 und einem übergeordneten, verteilten Steuerungssystem 4 gemäß der Erfindung.

Im Unterschied zum Verbund gemäß FIG 1 sind die Handlingsgeräte 1 entlang von zwei Fördereinrichtungen 2 mit unterschiedlichen Fördergeschwindigkeiten vF1, vF2 angeordnet. Sie sind dabei derart angeordnet, dass sie sowohl an der ersten, im unteren Teil der FIG 4 dargestellten Fördereinrichtung 2, als auch an der zweiten, im mittleren Teil der FIG 4 dargestellten Fördereinrichtung 2 "arbeiten" können.

Das im oberen Teil der FIG 4 gezeigte Steuerungssystem 4 ist zur Koordinierung des Verbundes aus den drei beispielhaft hintereinander angeordneten, mehrachsigen Handlingsgeräten 1 zum Ausführen jeweils mehrdimensionaler Arbeits- und oder Handlingsbewegungen und aus den beiden Fördereinrichtungen 2 zum Mitführen von Objekten 3 entlang der drei Handlingsgeräte 1 ausgebildet.

Das gezeigte Steuerungssystem 4 weist prozessorgestützte Mittel, wie z.B. eine CPU, zur Ausführung eines in maschinenlesbarer Form gespeicherten Modells MOD zur Durchführung des erfindungsgemäßen Steuerungsverfahrens auf. Im vorliegenden Beispiel wird das Modell MOD innerhalb einer Systemarchitektur SA auf einem Engineering-System ES in ein auf dem Steuerungssystem 4 lauffähiges Automatisierungsprogramm PRG umgesetzt. Umfasst das Steuerungssystem 4, wie in FIG 4 gezeigt, mehrere, jeweils einem der Handlingsgeräte 1 zugeordnete und über ein Kommunikationssystem BUS verbundene Steuergeräte 41-43, so kann das Automatisierungsprogramm PRG auf die jeweiligen Steuergeräte 41-43 aufgeteilt sein. Das Modell MOD sowie auch das Automatisierungsprogramm PRG können auch auf einem Datenspeichermedium gespeichert sein und von dort in das jeweilige Steuergerät 41-43 geladen werden.

Im Falle der verteilten Steuergeräte 41-43 werden die Bahnobjekte und das zumindest eine Geberobjekt auf den verteilten Steuergeräten 41-43 ausgeführt. Es wird dann der durch das jeweilige Geberobjekt bereitgestellte Leitwert über ein isochrones Kommunikationssystem BUS an die verteilt angeordneten Steuergeräte 41-43 übertragen. Die bei der Übertragung auftretenden Kommunikationsverzugszeiten bei dem jeweiligen Leitwert werden jeweils über eine Werteextrapolation kompensiert.

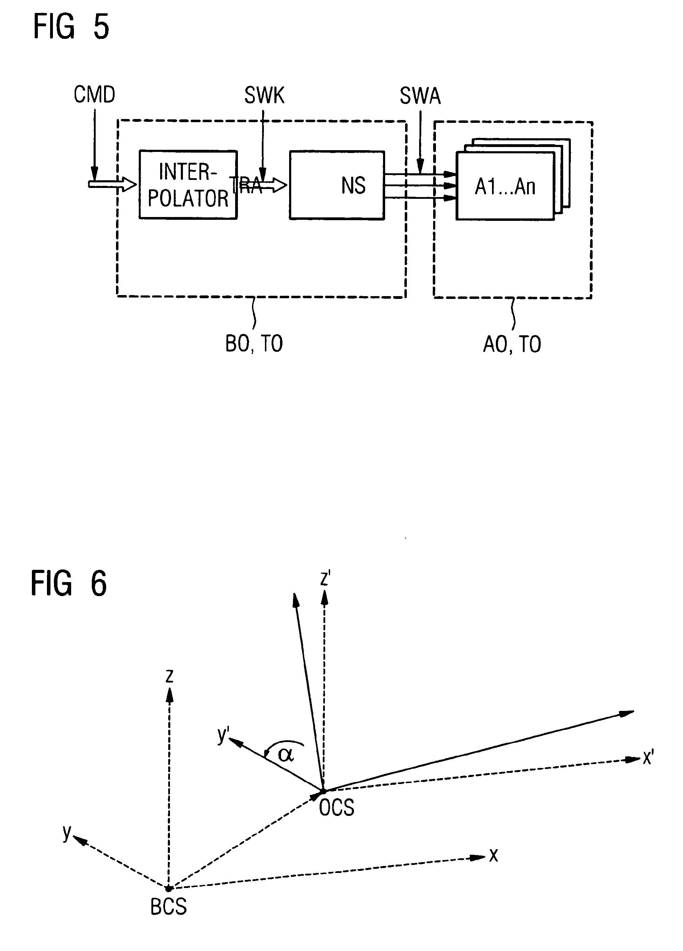

Weiterhin kann den jeweiligen Handlingsgeräten 1 in dem jeweiligen kinematischen Endpunkt KEP ein Endpunktkoordinatensystem zugeordnet sein, welches auf das gezeigte Basiskoordinatensystem BCS über eine Koordinatentransformation bezogen ist. Das in der FIG 4 aus Gründen der Übersichtlichkeit selbst nicht dargestellte Endpunktkoordinatensystem ist vorzugsweise Teil des jeweiligen Bahnobjektes. Im Beispiel der nachfolgenden FIG 5 ist dies noch näher beschrieben.

Den jeweiligen mitgeführten Objekten 3 kann vorzugsweise ein Objektkoordinatensystem OCS zugeordnet sein, welches gleichfalls auf das Basiskoordinatensystem BCS bezogen ist und welches mit einer jeweiligen bewegten Fördereinrichtung 2 mitgeführt wird. Hierzu sind beispielhaft vier Objektkoordinatensysteme OCS zu den mitgeführten Objekten bzw. Würfeln 3 eingezeichnet.

Ist den gezeigten Handlingsgeräten 1 nun jeweils ein Bahnobjekt BO zur Modellierung der Funktion der Bahninterpolation zugeordnet, so kann sich das jeweilige Handlingsgerät 1 zum Objektkoordinatensystem OCS der jeweiligen Fördereinrichtung 2 bzw. auf das mitbewegte OCS des zugeordneten Objektes 3 aufsynchronisieren. Die Zuordnung zum betreffenden Objektkoordinatensystem OCS erfolgt über eine eingangsseitige Verschaltung des jeweiligen Bahnobjektes zum entsprechenden Geberobjekt. Die Festlegung, welches Bahnobjekt mit welchem Handlingsgerät 1 verknüpft wird, kann einmalig festgelegt sein. Die Festlegung, welches Handlingsgerät mit welchem Geberobjekt seitens der Fördereinrichtung 2 oder welche reale oder virtuelle Achse mit diesem Bahnobjekt verknüpft wird, kann einmalig festgelegt sein oder alternativ während des Betriebs umgeschaltet oder geändert werden, wie z.B. über ein Bedien- und Beobachtungsgerät 5, welches gleichfalls mit dem Bussystem BUS verbunden ist.

FIG 5 zeigt beispielhaft den funktionalen Aufbau eines Bahnobjekts BO zur Modellierung der Funktionalität einer mehrdimensionalen Bahninterpolation gemäß der Erfindung. Dem gezeigten Bahnobjekt BO sind ausgangsseitig Achsobjekte AO zugeordnet. Diese führen die im Bahnobjekt BO vorgegebenen Bewegungen für die einzelnen Achsen aus. Im Bahnobjekt BO werden die berechneten kartesischen Sollwerte SWK für den Kinematikendpunkt des jeweiligen Handlingsgerätes in Achssollwerte SWA für die einzelnen Achsen des Handlingsgerätes umgerechnet.

FIG 6 zeigt ein Beispiel für ein Objektkoordinatensystem OCS und dessen Bezug auf ein Basiskoordinatensystem BCS. Das gezeigte OCS ist gegenüber dem Basiskoordinatensystem BCS linear verschoben und zugleich um einen Winkel α gedreht. Mit x, y, z bzw. x', y', z' sind die zugehörigen kartesischen Koordinaten bezeichnet.

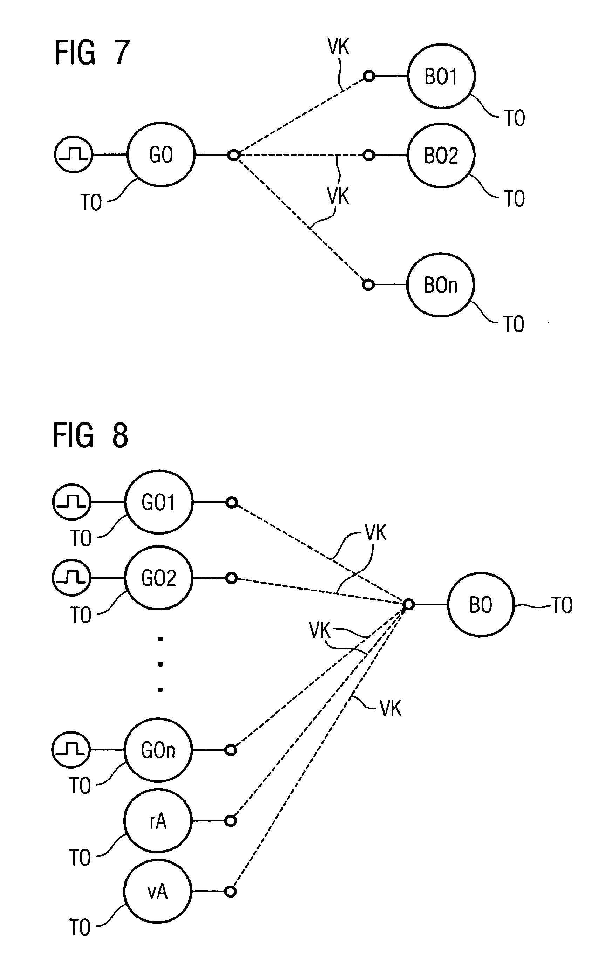

FIG 7 zeigt ein Beispiel für Verschaltungen eines Geberobjektes GO an mehrere Bahnobjekte BO1-BOn gemäß der Erfindung. Es kann prinzipiell eine beliebige Anzahl von Bahnobjekten BO1-BOn an ein Geberobjekt GO geschaltet sein. Die jeweilige Verschaltung VK kann fest oder alternativ umschaltbar sein.

FIG 8 zeigt ein Beispiel für Verschaltungen mehrere Geberobjekte GO1-GOn, einer realen Achse rA und einer virtuellen Achse vA an ein Bahnobjekt BO gemäß der Erfindung. Entsprechend dem Beispiel der FIG 7 kann prinzipiell eine beliebige Anzahl von Geberobjekten GO1-GOn und Achsen rA, vA mit einem jeweiligen Bahnobjekt BO verschaltet sein. Die virtuelle Achse vA ist vorzugsweise eine Rechenachse, um das Verhalten und die Verfahrmöglichkeiten einer realen Achse nachzubilden.Die jeweilige Verschaltung VK kann auch hier fest oder alternativ umschaltbar sein.

## Patentansprüche

1. Steuerungsverfahren für einen Verbund aus mehreren, hintereinander und/oder nebeneinander angeordneten, mehrachsigen Handlingsgeräten (1) zum Ausführen jeweils mehrdimensionaler Arbeits- und/oder Handlingsbewegungen und aus zumindest einer Fördereinrichtung (2) zum Mitführen von Objekten (3) entlang der Handlingsgeräte (1), wobei die Handlingsgeräte (1) zum Aufnehmen, Bearbeiten und Absetzen der jeweiligen mitgeführten Objekte (3) vorgesehen sind, **dadurch gekennzeichnet, dass** ein Leitwert für die Bewegungsfolge einer mehrdimensionalen Arbeits- und/oder Handlingsbewegung für ein jeweiliges Handlingsgerät (1) durch Bahnobjekte (BO, B1-Bn) in Form von Technologieobjekten (TO) modelliert wird, welche die entsprechende Funktionalität für die Bahninterpolation mit gleichzeitiger Bewegungsfolge an einem Leitwert der jeweiligen Fördereinrichtung (2) bereitstellen.

2. Steuerungsverfahren nach Anspruch 1, **dadurch gekennzeichnet, dass** ein Leitwert ein Weggeber-Istwert (DG) der jeweiligen Fördereinrichtung (2), ein Ist- oder Sollwert einer realen Achse (rA) oder ein Ist- oder Sollwert einer virtuellen, rechnerischen Achse (vA) ist.

3. Steuerungsverfahren nach Anspruch 2, **dadurch gekennzeichnet, dass** zur Erfassung eines auf einem Weggebersignal (DG) eines Weggebers (23) basierenden Leitwertes der jeweiligen Fördereinrichtung (2) ein Geberobjekt (GO, GO1-GOn) in Form eines Technologieobjektes (TO) vorgesehen ist, welches die entsprechende technologische Funktion modelliert.

4. Steuerungsverfahren nach Anspruch 3, **dadurch gekennzeichnet, dass** die Bahnobjekte (BO, B1-Bn) und das zumindest eine Geberobjekt (GO, GO1-GOn) auf einem gleichen Steuerungssystem (4) ausgeführt werden.

5. Steuerungsverfahren nach Anspruch 3, **dadurch gekennzeichnet,**
- **dass** die Bahnobjekte (BO, B1-Bn) und das zumindest eine Geberobjekt (BO, B1-Bn) auf verschiedenen, verteilt angeordneten Steuergeräten (41-43) ausgeführt werden,
- **dass** der durch das jeweilige Geberobjekt (GO, GO1-GOn) bereitgestellte Leitwert über ein isochrones Kommunikationssystem (BUS) an die verteilt angeordneten Steuergeräte (41-43) übertragen wird und
- **dass** die bei der Übertragung auftretenden Kommunikationsverzugszeiten bei dem jeweiligen Leitwert über eine Werteextrapolation kompensiert werden.

6. Steuerungsverfahren nach einem der vorangegangenen Ansprüche, **dadurch gekennzeichnet, dass** den jeweiligen Handlingsgeräten (1) in einem kinematischen Endpunkt (KEP) ein Endpunktkoordinatensystem zugeordnet wird, welches auf ein Basiskoordinatensystem (BCS) über eine Koordinatentransformation bezogen ist und welches Teil des jeweiligen Bahnobjektes (BO, BO1-BOn) ist.

7. Steuerungsverfahren nach einem der vorangegangenen Ansprüche, **dadurch gekennzeichnet, dass** den jeweiligen mitgeführten Objekten (3) ein Objektkoordinatensystem (OCS) zugeordnet wird, welches auf ein Basiskoordinatensystem (BCS) bezogen ist und welches mit einer jeweiligen bewegten Fördereinrichtung (2) mitgeführt wird.

8. Steuerungsverfahren nach einem der Ansprüche 3 bis 7, **dadurch gekennzeichnet, dass** ein jeweiliges, zu einer Fördereinrichtung (2) gehörendes Geberobjekt (GO, GO1-GOn), ein zu einer realen Achse (rA) oder zu einer virtuellen Achse (vA) gehörendes Technologieobjekt (TO) für eine Zuordnung eines Leitwertes individuell an ein jeweiliges Bahnobjekt (BO, BO1-BOn) schaltbar ist.

9. Steuerungsverfahren nach Anspruch 8, **dadurch gekennzeichnet, dass** die Verschaltung eines jeweiligen Bahnobjektes (BO, BO1-Bon) mit einem jeweiligen, zu einer Fördereinrichtung (2) gehörenden Geberobjekt (GO, GO1-GOn), ein zu einer realen Achse (rA) oder zu einer virtuellen Achse (vA) gehörenden Technologieobjekt (TO) im Betrieb fest ist.

10. Steuerungsverfahren nach Anspruch8, **dadurch gekennzeichnet, dass** die Verschaltung eines jeweiligen Bahnobjektes (BO, BO1-Bon) mit einem jeweiligen, zu einer Fördereinrichtung (2) gehörenden Geberobjekt (GO, GO1-GOn), ein zu einer realen Achse (rA) oder zu einer virtuellen Achse (vA) gehörenden Technologieobjekt (TO) im Betrieb änderbar oder umschaltbar ist.

11. Datenspeichermedium mit einem in maschinenlesbarer Form gespeicherten Modell (MOD) aus Technologieobjekten (TO) zur Modellierung der Funktionalität eines Verbundes aus mehreren, hintereinander und/oder nebeneinander angeordneten, mehrachsigen Handlingsgeräten (1) zum Ausführen jeweils mehrdimensionaler Arbeits- und/oder Handlingsbewegungen und aus zumindest einer Fördereinrichtung (2) zum Mitführen von Objekten (3) entlang der Handlingsgeräte (1), wobei das Modell (MOD) zur Durchführung des erfindungsgemäßen Steuerungsverfahrens nach einem der vorangegangenen Ansprüche auf einem prozessorgestützten Steuerungssystem (4) in Echtzeit vorgesehen ist.

12. Steuerungssystem für einen Verbund aus mehreren, hintereinander und/oder nebeneinander angeordneten, mehrachsigen Handlingsgeräten (1) zum Ausführen jeweils mehrdimensionaler Arbeits- und/oder Handlingsbewegungen und aus zumindest einer Fördereinrichtung (2) zum Mitführen von Objekten (3) entlang der Handlingsgeräte (1), wobei die Handlingsgeräte (1) zum Aufnehmen, Bearbeiten und Absetzen der jeweiligen mitgeführten Objekte (3) vorgesehen sind, **dadurch gekennzeichnet, dass** das Steuerungssystem prozessorgestützte Mittel zur Ausführung eines in maschinenlesbarer Form gespeicherten Modells (MOD) aus Technologieobjekten (TO) zur Modellierung der Funktionalität des Verbundes zur Durchführung des Steuerungsverfahrens nach einem der Ansprüche 1 bis 10 aufweist.

13. Steuerungssystem nach Anspruch 13, **dadurch gekennzeichnet, dass** das Steuerungssystem mehrere, jeweils einem der Handlingsgeräte (1) zugeordnete und über ein Kommunikationssystem (BUS) verbundene Steuergeräte (41-43) umfasst, wobei das Steuerungssystem Kompensationsmittel zur Kompensation von Kommunikationsverzugszeiten über eine Werteextrapolation aufweist.

14. Verbund aus mehreren, hintereinander und/oder nebeneinander angeordneten, mehrachsigen Handlingsgeräten (1) zum Ausführen jeweils mehrdimensionaler Arbeits- und/oder Handlingsbewegungen, aus zumindest einer Fördereinrichtung (2) zum Mitführen von Objekten (3) entlang der Handlingsgeräte (1) und aus einem Steuerungssystem (4) gemäß Anspruch 12 oder 13.

## Claims

1. Control method for a complex consisting of a plurality of multiaxial handling devices (1) arranged in succession and/or side by side for the execution of multidimensional working and/or handling movements for the given situation and consisting of at least one conveyor facility (2) for transporting objects (3) along the handling devices (1), wherein the handling devices (1) are provided for picking up, processing and setting down the respective objects (3) being transported along,
**characterised in that**
a guide value for the movement sequence of a multidimensional working and/or handling movement for a respective handling device (1) is modelled by path objects (BO, B1-Bn) in the form of technology objects (TO) which provide the corresponding functionality for the path interpolation with a simultaneous movement sequence at a guide value for the respective conveyor facility (2).

2. Control method according to claim 1,
**characterised in that**
a guide value is a position encoder actual value (DG) for the respective conveyor facility (2), an actual or nominal value for a real axis (rA) or an actual or nominal value for a virtual, calculated axis (vA).

3. Control method according to claim 2,
**characterised in that**
in order to acquire a guide value, based on a position encoder signal (DG) from a position encoder (23), for the respective conveyor facility (2) an encoder object (GO, GO1-GOn) is provided in the form of a technology object (TO), which models the corresponding technological function.

4. Control method according to claim 3,
**characterised in that**
the path objects (BO, B1-Bn) and the at least one encoder object (GO, GO1-GOn) are executed on an identical control system (4).

5. Control method according to claim 3,
**characterised in that**
- the path objects (BO, B1-Bn) and the at least one encoder object (BO, B1-Bn) are executed on different control units (41-43) arranged in distributed fashion,
- the guide value provided by the respective encoder object (GO, GO1-GOn) is transferred by way of an isochronous communication system (BUS) to the control units (41-43) arranged in distributed fashion and
- the communication delay times occurring during the transfer can be compensated for in the case of the respective guide value by way of an extrapolation of values.

6. Control method according to one of the preceding claims,
**characterised in that**
an end-point coordinate system, which is related to a base coordinate system (BCS) by way of a coordinate transformation and which is part of the respective path object (BO, B01-BOn), is assigned to the respective handling devices (1) in a kinematic end point (KEP).

7. Control method according to one of the preceding claims,
**characterised in that**
an object coordinate system (OCS), which is related to a base coordinate system (BCS) and which is transported along by a respective moving conveyor facility (2), is assigned to the respective objects (3) transported along.

8. Control method according to one of claims 3 to 7,
**characterised in that**
a respective encoder object (GO, GO1-GOn) belonging to a conveyor facility (2), a technology object (TO) belonging to a real axis (rA) or to a virtual axis (vA), can be individually connected to a respective path object (BO, BO1-BOn) for an assignment of a guide value.

9. Control method according to claim 8,
**characterised in that**
the interconnection of a respective path object (BO, BO1-Bon) with a respective encoder object (GO, GO1-GOn) belonging to a conveyor facility (2), a technology object (TO) belonging to a real axis (rA) or to a virtual axis (vA), is fixed during operation.

10. Control method according to claim 8,
**characterised in that**
the interconnection of a respective path object (BO, BO1-Bon) with a respective encoder object (GO, GO1-GOn) belonging to a conveyor facility (2), a technology object (TO) belonging to a real axis (rA) or to a virtual axis (vA), is modifiable or switchable during operation.

11. Data storage medium consisting of a model (MOD) stored in machine readable form consisting of technology objects (TO) for modelling the functionality of a complex consisting of a plurality of multiaxial handling devices (1), arranged in succession and/or side by side, for executing multidimensional working and/or handling movements for the given situation and at least one conveyor facility (2) for transporting objects (3) along the handling devices (1), wherein the model (MOD) is provided for performing the control method according to the invention according to one of the preceding claims on a processor-aided control system (4) in real time.

12. Control system for a complex consisting of a plurality of multiaxial handling devices (1) arranged in succession and/or side by side for the execution of multidimensional working and/or handling movements for the given situation and consisting of at least one conveyor facility (2) for transporting objects (3) along the handling devices (1), wherein the handling devices (1) are provided for picking up, processing and setting down the respective objects (3) being transported along,
**characterised in that**
the control system has processor-aided means for executing a model (MOD) stored in machine readable form consisting of technology objects (TO) for modelling the functionality of the complex in order to perform the control method according to one of claims 1 to 10.

13. Control system as claimed in claim 13,
**characterised in that**
the control system comprises a plurality of control units (41-43), assigned in each case to one of the handling devices (1) and connected by way of a communication system (BUS), wherein the control system has compensation means in order to compensate for communication delay times by way of an extrapolation of values.

14. Complex consisting of a plurality of multiaxial handling devices (1), arranged in succession and/or side by side, for the execution of multidimensional working and/or handling movements for the given situation, at least one conveyor facility (2) for transporting objects (3) along the handling devices (1), and a control system (4) according to claim 12 or 13.

## Revendications

1. Procédé de commande d'une combinaison de plusieurs appareils ( 1 ) de manipulation disposés les uns derrière les autres et/ou les uns à côté des autres et à plusieurs axes pour réaliser respectivement des mouvements de travail et/ou de manipulation à plusieurs dimensions et d'au moins un dispositif ( 2 ) de convoyage pour faire passer des objets ( 3 ) le long des appareils ( 1 ) de manipulation, les appareils ( 1 ) de manipulation étant prévus pour la réception, le traitement et le dépôt des objets ( 3 ) respectifs qui passent, **caractérisé en ce que** l'on modélise une valeur de conduite pour la succession d'un mouvement pluridimensionnel de travail et/ou de manipulation d'un appareil ( 1 ) de manipulation respectif par des objets ( BO, B1-Bn ) trajectoires sous la forme d'objets ( TO ) de technologie, qui procurent la fonctionnalité correspondante, pour l'interpolation de trajectoire avec une succession de mouvements simultanés, à une valeur de conduite du dispositif ( 2 ) convoyeur respectif.

2. Procédé de commande suivant la revendication 1, **caractérisé en ce qu'**une valeur de conduite est une valeur ( DG ) réelle d'indicateur de trajectoire du dispositif ( 2 ) de convoyage respectif, une valeur réelle ou de consigne d'un axe ( rA ) réel ou une valeur réelle ou de consigne d'un axe ( vA ) virtuel, calculé.

3. Procédé de commande suivant la revendication 2, **caractérisé en ce que**, pour la détection d'une valeur de conduite, basée sur un signal ( DG ) indicateur ( 23 ) de trajet, du dispositif ( 2 ) de convoyage respectif, il est prévu un objet ( GO, G1-GOn ) indicateur sous la forme d'un objet ( T0 ) de technologie, qui modélise la fonction technologique correspondante.

4. Procédé de commande suivant la revendication 3, **caractérisé en ce que** les objets ( BO, B1-Bn ) trajectoires et le au moins un objet ( GO, G1-GOn ) indicateur sont réalisés sur un même système ( 4 ) de commande.

5. Procédé de commande suivant la revendication 3, **caractérisé**
- **en ce que** les objets ( BO, B1-Bn ) trajectoires et le au moins un objet ( BO, B1-Bn ) indicateur sont réalisés sur des appareils ( 41-43 ) de commande différents et disposés de manière répartie,
- **en ce que** la valeur de conduite, procurée par l'objet ( GO, G1-GOn ) indicateur respectif, est transmise par un système bus de communication isochrone aux appareils ( 41-43 ) de commande disposés de manière répartie et,
- **en ce que** les temps de retard de communication se produisant lors de la transmission sont compensés pour la valeur de conduite respective par une extrapolation de valeur.

6. Procédé de commande suivant l'une des revendications précédentes, **caractérisé en ce qu'**il est affecté aux appareils ( 1 ) de manipulation respectifs, dans un point ( KEP ) terminal cinématique, un système de coordonnées de point terminal, qui est rapporté à un système ( BCS ) de coordonnées de base par une transformation de coordonnée et qui fait partie de l'objet ( BO, B1-Bn ) trajectoire respectif.

7. Procédé de commande suivant l'une des revendications précédentes, **caractérisé en ce qu'**il est affecté, aux objets ( 36 ) respectifs qui passent, un système OCS ) de coordonnées objet, qui est rapporté à un système ( BCS ) de coordonnées de base et qui est entraîné avec un dispositif ( 2 ) de convoyage déplacé respectif.

8. Procédé de commande suivant l'une des revendications 3 à 7, **caractérisé en ce qu'**un objet ( GO, G1-GOn ) indicateur respectif appartenant à un dispositif ( 2 ) de convoyage, un objet ( T0 ) de technologie appartenant à un axe ( rA ) réel ou à un axe ( vA ) virtuel peut, pour une affectation d'une valeur de conduite, être commuté individuellement sur un objet ( BO, B1-Bn ) trajectoire respectif.

9. Procédé de commande suivant la revendication 8, **caractérisé en ce que** le câblage d'un objet ( BO, B1-Bn ) trajectoire respectif avec un objet ( GO, G1-GOn ) indicateur respectif appartenant au dispositif ( 2 ) de convoyage ou avec un objet ( T0 ) de technologie appartenant à un axe ( rA ) réel ou à un axe ( vA ) virtuel, est fixe en service.

10. Procédé de commande suivant la revendication 8, **caractérisé en ce que** le câblage d'un objet ( BO, B1-Bn ) trajectoire respectif avec un objet ( GO, G1-GOn ) indicateur respectif appartenant au dispositif ( 2 ) de convoyage ou avec un objet ( T0 ) de technologie appartenant à un axe ( rA ) réel ou à un axe ( vA ) virtuel, peut être modifié ou commuté en service.

11. Support de mémoire de données, comprenant un modèle ( MOD ) mémorisé sous une forme pouvant être lue par une machine est composé d'objets ( T0 ) de technologie pour la modélisation de la fonctionnalité d'une combinaison de plusieurs appareils ( 1 ) de manipulation disposés les uns derrière les autres et/ou les uns à côté des autres et à plusieurs axes, pour réaliser respectivement des mouvements de travail et/ou de manipulation à plusieurs dimensions, et d'au moins un dispositif ( 2 ) de convoyage, dans lequel le modèle ( MOD ) est prévu pour effectuer le procédé de commande suivant l'invention suivant l'une des revendications précédentes, en temps réel sur un système ( 4 ) de commande assisté par processeur.

12. Système de commande pour une combinaison de plusieurs appareils ( 1 ) de manipulation disposés les uns derrière les autres et/ou les uns à côté des autres et à plusieurs axes, pour réaliser respectivement des mouvements de travail et/ou de manipulation à plusieurs dimensions et d'au moins un dispositif ( 2 ) de convoyage pour faire passer des objets ( 3 ) le long des appareils ( 1 ) de manipulation, les appareils ( 1 ) de manipulation étant prévus pour la réception, le traitement et le dépôt des objets ( 3 ) respectifs qui passent, **caractérisé en ce que** le système de commande comporte des moyens assistés par processeur pour la réalisation d'un modèle ( MOD ) mémorisé sous une forme pouvant être lue par une machine est composé d'objets ( T0 ) de technologie pour la modélisation de la fonctionnalité de la combinaison pour effectuer le procédé de commande suivant l'une des revendications à 10.

13. Système de commande suivant la revendication 13, **caractérisé en ce que** le système de commande comprend plusieurs appareils ( 41 - 43 ) de commande associés respectivement à l'un des appareils ( 1 ) de manipulation et relié par un système ( BUS ) de communication, le système de commande ayant des moyens de compensation pour la compensation de temps de retard de communication par une extrapolation de valeur.

14. Combinaison de plusieurs appareils ( 1 ) de manipulation disposés les uns derrière les autres et/ou les uns à côté des autres et à plusieurs axes, pour réaliser respectivement des mouvements de travail et/ou de manipulation à plusieurs dimensions, et d'au moins un dispositif ( 2 ) de convoyage et d'un système ( 4 ) de commande suivant la revendication 12 ou 13.
